# EUROPEAN PATENT SPECIFICATION

(11) **EP 1 769 891 B1**
(45) Date of publication and mention of the grant of the patent: **22.10.2014**
(21) Application number: 06020144.9
(22) Date of filing: 26.09.2006
(51) Int. Cl.: B25J 9/16, G05B 19/42

(54) **Offline teaching apparatus for robot**
Offline Lehrgerät für einen Roboter
Appareil d'apprentissage hors ligne d'un robot

(30) Priority: 28.09.2005 JP 2005282197
(43) Date of publication of application: 04.04.2007
(73) Proprietor: FANUC CORPORATION, Oshino-mura Minamitsuru-gun Yamanashi 401-0597 (JP)
(72) Inventor: Kobayashi, Hirohiko, Fujiyoshida-shi, Yamanashi 403-0004 (JP); Nagatsuka, Yoshiharu, FANUC Dai3virakaramatsu, Minamitsuru-gun, Yamanashi 401-0511 (JP)
(74) Representative: Thum, Bernhard

(56) References cited:
- WO-A2-03/059582
- DE-A1-102004 016 329
- JP-A- 11 254 360
- US-A- 5 727 132
- US-A1- 2004 189 631
- US-A1- 2004 249 508

## Description

### BACKGROUND OF THE INVENTION

### 1. Field of the Invention

The present invention relates generally to a programming technology for a robot and, more particularly, to an offline teaching apparatus for teaching, in an offline mode, a robot operation, relating to tracking and working, performed by a robot on a traveling workpiece.

### 2. Description of the Related Art

In a manufacturing system using a robot, especially an industrial robot, a configuration in which a robot performs a certain working, such as a workpiece holding, using a tool (e.g., an end-effector) attached to the end of an arm, on a workpiece (e.g., an object to be worked) traveling along a carrier route, while simultaneously acting so as to follow the traveling workpiece (this action is referred to as "tracking", in the present application), has been conventionally known. For example, Gazette containing Japanese Patent No. 3002097 (JP-B-3002097) discloses a robot system wherein a robot performs a certain working on a traveling workpiece carried by a conveyor while tracking the workpiece, and wherein the positional deviation of the workpiece is detected using a visual sensor before starting a tracking operation, so that the robot is manipulated to perform a tracking motion as to be corrected on the basis of the detection result of the positional deviation. Also, Japanese Unexamined Patent Publication (Kokai) No. 9-72717 (JP-A-9-72717) discloses a robot system wherein a workpiece tracking motion similar to that in JP-B-3002097 is performed, and wherein an image of a workpiece can be obtained and processed efficiently by a visual sensor. Also, Japanese Unexamined Patent Publication (Kokai) No. 9-131683 discloses a robot system wherein a workpiece tracking motion similar to that in JP-A-9-72717 is performed, and wherein a plurality of robots cooperate to perform or suitably share in the workpiece tracking motion.

US 2004/0189631 A1 discloses a method and device for visualizing computer-assisted information in an image of the real environment. According to this prior art document it is possible to visualize robots-specific space objects, such as the robots themselves, path pattern, workpieces on conveying installations, as well as the total operating area reachable by a robot and/or permitted operating areas and/or non-permitted operating areas on the display. By the manipulation of these virtual augmented robot-specific space objects, a manipulation of robot-specific data is achieved. Thus, a user can correct a robot program by means of augmented reality in an offline mode.

In the above-described conventional robot systems, the teaching of the robot operation relating to tracking and working is accomplished by moving the robot and conveyor as actual machines. In place of this teaching procedure, the robot operation may be taught by an offline teaching process that does not use the actual robot and the actual conveyor. In the offline teaching process, in general, the models of the robot and its working environment are provided in a computer, and the robot model is manipulated, on a display screen, to simulate a desired robot operation, so that both the information of position/orientation and the information of motion sequence to be taught to the actual robot, are obtained. Due to the simulation of the robot operation, the validity of the information to be taught can be checked, and thereby it is possible to prepare an optimal operation program.

In the above-described conventional robot systems allowing a workpiece tracking motion to be performed, in order to ensure an offline teaching of a robot operation, the model of a robot including a tool, as well as the models of a conveyor and a workpiece, are displayed on a screen of a computer in a relative positional relationship corresponding to that in an actual working environment of the robot. Then, on the screen, the models of the conveyor and the workpiece are manipulated to simulate a workpiece carrying operation and, simultaneously, the model of the robot is manipulated to simulate a robot operation relating to tracking and working. In this connection, it has not been considered, in the conventional offline teaching process, to explicitly indicate, on the display screen, an acceptable spatial range permitting an actual robot to perform the robot operation safely in an actual working environment. Therefore, in the conventional offline teaching, the spatial range guaranteeing that the actual robot is able to safely perform the robot operation is not confirmed, and thus it is difficult to optimize the teaching information through the simulation. In other words, in a case where the conventional offline teaching process is employed, as a robot-operation teaching process, in the robot system allowing the tracking motion for a workpiece, it is generally difficult to improve the efficiency, safety and reliability of the robot system by adjusting the robot operation and the acceptable spatial range.

JP H11-254360 A discloses a simulation device for a robot which can display the operating area of a robot with 3D images. The boundary surface of said robot operating area is also displayed. However, the workpiece remains static during the simulation. Furthermore, an adjustment of the acceptable operation range of the robot is not contemplated.

### SUMMARY OF THE INVENTION

It is an object of the present invention to provide an offline teaching apparatus adapted for teaching, in an offline mode, a robot operation relating to tracking and working, performed by a robot on a traveling workpiece, wherein it is possible to confirm or identify, on a model displaying screen, a spatial range guaranteeing an actual robot to safely perform the robot operation, and thereby to surely optimize teaching information through a simulation, as well as to improve the efficiency, safety and reliability of a robot system.

To accomplish the above object, the present invention provides an offline teaching apparatus adapted for generating and teaching, in an offline mode, a robot operation relating to tracking and working performed by a robot on a workpiece traveling along a carrier route, comprising a model-image generating section adapted for generating images of a carrier-route model, a workpiece model and a robot model, provided respectively by modeling the carrier route, the workpiece and the robot; an indicator generating section adapted for generating a base-point indicator representing a base point used for detecting passing of the workpiece along the carrier route, and also generating an upstream-end indicator and a downstream-end indicator, representing respectively a motion-acceptable upstream end and a motion-acceptable downstream end, the upstream end and the downstream end defining, along a workpiece traveling direction, a spatial range permitting the robot to perform the robot operation, at a location downstream of the base point in the workpiece traveling direction along the carrier route; a display section adapted for displaying, on a screen, the images of the carrier-route model, the workpiece model and the robot model, generated by the model-image generating section, together with the base-point indicator, the upstream-end indicator and the downstream-end indicator, generated by the indicator generating section, in a relative positional relationship corresponding to an actual working environment of the robot; a carrying-operation simulating section adapted for causing the workpiece model displayed by the display section to simulate a workpiece traveling motion along the carrier-route model on the screen; and a robot-operation simulating section adapted for causing the robot model displayed by the display section to simulate the robot operation on the screen, during a period from an instant when the workpiece model passes by the upstream-end indicator until an instant when the workpiece model arrives at the downstream-end indicator due to the workpiece traveling motion on the screen, wherein the offline teaching apparatus further comprises a contact detecting section adapted for detecting a contact, caused on said screen, between said robot model displayed by said display section and said downstream-end indicator, during a period when said robot-operation simulating section simulates the robot operation, and wherein said indicator generating section is adapted for generating said downstream-end indicator in a form extended by an adjustable dimension in a direction toward said upstream-end indicator on said screen.

The above-described offline teaching apparatus may further comprise an indicator-shift commanding section adapted for issuing a command for shifting at least one of the base-point indicator, the upstream-end indicator and the downstream-end indicator, displayed by the display section, in a direction along the carrier-route model on the screen, and a data modifying section adapted for modifying position data of at least one of the base-point indicator, the upstream-end indicator and the downstream-end indicator, in accordance with the command issued by the indicator-shift commanding section.

The indicator generating section may determine respective positions of the base-point indicator, the upstream-end indicator and the downstream-end indicator on the screen, based on actual carrying-operation information concerning the carrier route.

The carrying-operation simulating section may generate the workpiece traveling motion on the screen, based on actual carrying-operation information concerning the carrier route.

### BRIEF DESCRIPTION OF THE DRAWINGS

The above and other objects, features and advantages of the present invention will become more apparent from the following description of examples and a preferred embodiment in connection with the accompanying drawings, wherein:
Fig. 1 is a functional block diagram showing the basic configuration of an offline teaching apparatus according to an example useful for understanding the present invention;
Fig. 2 is an illustration showing an exemplary screen representation in the offline teaching apparatus having the basic configuration of Fig. 1;
Fig. 3 is a functional block diagram showing the configuration of an offline teaching apparatus according to an example useful for understanding the present invention;
Fig. 4A is an illustration showing a state before an indicator is shifted, in an exemplary simulation in the offline teaching apparatus of Fig. 3;
Fig. 4B is an illustration showing a state after the indicator is shifted, in the exemplary simulation of Fig. 4A;
Fig. 5 is a functional block diagram showing the configuration of an offline teaching apparatus according to an embodiment of the present invention; and
Fig. 6 is an illustration showing an exemplary simulation in the offline teaching apparatus of Fig. 5.

### DETAILED DESCRIPTION

The examples and embodiment of the present invention are described below, in detail, with reference to the accompanying drawings. In the drawings, the same or similar components are denoted by common reference numerals.

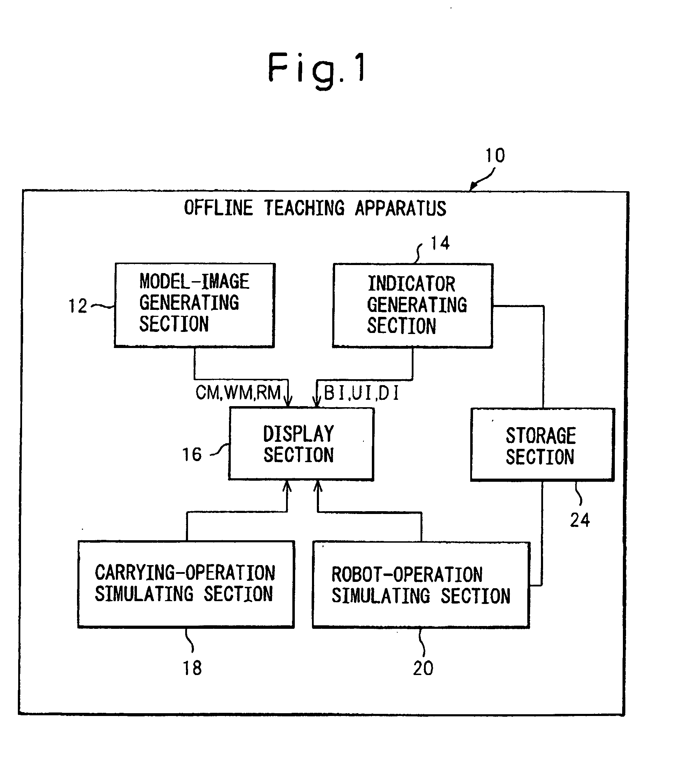

Referring to the drawings, Fig. 1 shows, in a functional block diagram, the basic configuration of an offline teaching apparatus 10 useful for understanding the present invention. The offline teaching apparatus 10 has a configuration for generating and teaching, in an offline mode, a robot operation relating to tracking and working performed by a robot, the robot tracking a workpiece traveling along a carrier route and simultaneously performing a certain working on the workpiece. The offline teaching apparatus 10 may be constructed, for example, by installing required software on a computer such as a personal computer.

The offline teaching apparatus 10 includes a model-image generating section 12 for generating images of a carrier-route model CM, a workpiece model WM and a robot model RM, provided respectively by modeling the carrier route, the workpiece and the robot; an indicator generating section 14 for generating a base-point indicator BI representing a base point used for detecting the passing of the workpiece along the carrier route, and also generating an upstream-end indicator UI and a downstream-end indicator DI, representing respectively a motion-acceptable upstream end and a motion-acceptable downstream end, which define, along a workpiece traveling direction, a spatial range permitting the robot to perform the robot operation, at a location downstream of the base point in the workpiece traveling direction along the carrier route; a display section 16 for displaying, on a screen, the images of the carrier-route model CM, the workpiece model WM and the robot model RM, generated by the image generating section 12, together with the base-point indicator BI, the upstream-end indicator UI and the downstream-end indicator DI, generated by the indicator generating section 14, in a relative positional relationship corresponding to that in an actual working environment of the robot; a carrying-operation simulating section 18 for causing the workpiece model WM displayed by the display section 16 to simulate a workpiece traveling motion along the carrier-route model CM on the screen; and a robot-operation simulating section 20 for causing the robot model RM displayed by the display section 16 to simulate the robot operation on the screen, during a period from an instant when the workpiece model WM passes by the upstream-end indicator UI until an instant when the workpiece model WM arrives at the downstream-end indicator DI due to the workpiece traveling motion on the screen. The model-image generating section 12, the indicator generating section 14, the carrying-operation simulating section 18 and the robot-operation simulating section 20 may be configured by a CPU (central processing unit) of a computer, such as a personal computer, and the display section 16 may be configured by the same CPU and an appended display unit.

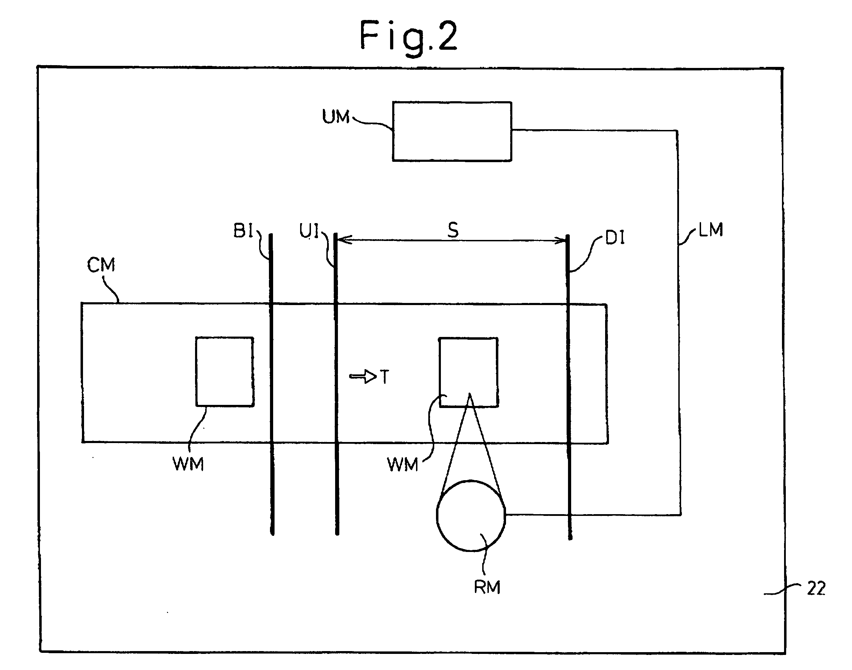

Fig. 2 shows an exemplary representation on a screen 22, displayed by the display section 16 of the offline teaching apparatus 10. The screen 22 displays, in a relative positional relationship corresponding to that in the actual working environment of the robot, the carrier-route model CM, the workpiece model WM traveling along the carrier-route model CM, the robot model RM performing the robot operation relating to tracking and processing on the traveling workpiece model WM, the base-point indicator BI used for detecting the passing of the workpiece model WM along the carrier route model CM, and the upstream-end indicator UI and the downstream-end indicator DI, which define, along the workpiece traveling direction T, an acceptable spatial range S permitting the robot model RM to safely perform the robot operation. The screen 22 further displays a controller model UM prepared by modeling a robot controller or control unit, connected to the actual robot, and a signal line model LM.

In the offline teaching apparatus 10, the indicator generating section 14 may determine the respective positions, on the screen 22, of the base-point indicator BI, the upstream-end indicator UI and the downstream-end indicator DI, displayed by the display section 16, on the basis of actual carrying-operation information concerning the carrier route in the actual working environment of the robot. In this connection, in the case where the robot operation is taught by using an actual robot, the following procedure is performed by way of example: the position and speed of rotation of a motor, driving a conveyor as an actual carrier route, are detected by using a pulse-coder, a base point is thereby set at a position spaced by a desired distance (or a desired number of pulses) from a workpiece introducing end of the carrier route, and also a motion acceptable upstream-end and a motion-acceptable downstream-end are set at positions spaced by desired distances (or desired numbers of pulses) from the base point. Thus, also in the offline teaching apparatus 10, the following procedure may be performed on the screen 22, by using the carrying-operation information concerning the carrier route (i.e., information corresponding to the number of pulses representing a carrying speed and/or a carrying position): the base-point indicator BI is set at a position spaced by a desired distance from a workpiece introducing end (a left end, in the drawing) of the carrier-route model CM, and the upstream-end indicator UI and the downstream-end indicator DI are set at positions spaced by desired distances from the base-point indicator BI. The positions of the base-point indicator BI, the upstream-end indicator UI and the downstream-end indicator DI, set in this manner, are stored in a storage section 24 (Fig. 1). According to this configuration, it is possible to minimize a difference between the actual working environment of the robot and a simulated working environment.

In the offline teaching apparatus 10, the carrying-operation simulating section 18 may generate the workpiece traveling motion of the workpiece model WM on the screen 22, on the basis of the actual carrying-operation information concerning the carrier route (i.e., information corresponding to the number of pulses representing a carrying speed and/or a carrying position). The traveling position of the workpiece model WM due to the workpiece traveling motion generated by the carrying-operation simulating section 18 (which corresponds, e.g., to the carrying position of a conveyor as the actual carrier route) is read by the robot-operation simulating section 20 and stored in the storage section 24. Thus, the traveling positions of the workpiece model WM, at the respective instances when the workpiece model WM passes by the indicators BI, UI and DI, are stored in the storage section 24. In the simulation, the robot-operation simulating section 20 and the storage section 24 are provided in the controller model UM.

When the workpiece model WM arrives at the upstream-end indicator UI on the screen 22 due to the workpiece traveling motion generated by the carrying-operation simulating section 18, the robot-operation simulating section 20 judges that the workpiece model WM arrives at the upstream-end indicator UI by referring to position data stored in the storage section 24, and causes the robot model RM to start the robot operation. In this connection, in the case where the robot operation is taught by using an actual robot, the following procedure is performed by way of example: position information, based on which the robot performs a desired working on a workpiece statically placed at a base point on an actual carrier route, is previously taught to the robot as reference data, and the robot performs a tracking motion for the workpiece in accordance with amended position information, as practical teaching data, obtained by adding, to the reference data, the distance the workpiece is carried from the base point. Thus, also in the offline teaching apparatus 10, the following procedure may be performed on the screen 22: position information, based on which the robot model RM performs a desired working on the workpiece model WM statically placed at the position of the base-point indicator BI, is previously stored in the storage section 24 of the robot-operation simulating section 20 as reference data, and the robot model RM is allowed to perform the tracking motion for the workpiece model WM in accordance with amended position information, as practical teaching data, obtained by adding, to the reference data, a carried distance of the workpiece model WM from the base-point indicator BI. According to this configuration, it is possible to minimize a difference between the actual working environment of the robot and a simulated working environment.

Thus, in the offline teaching apparatus 10 having the above-described configuration, the spatial range S guaranteeing the safety of the robot operation is clearly shown by the upstream-end indicator UI and the downstream-end indicator DI on the screen 22 of the display section 16. Accordingly, when conducting an offline teaching, it is possible to suitably adjust the robot operation and/or the spatial range S by a simulation in such a manner as to allow the robot model RM to thoroughly perform the robot operation relating to tracking and working in safety within the spatial range S, and thereby to optimize the teaching information. As a result, the offline teaching apparatus 10 can achieve an improvement in efficiency, safety and reliability for an actual robot system.

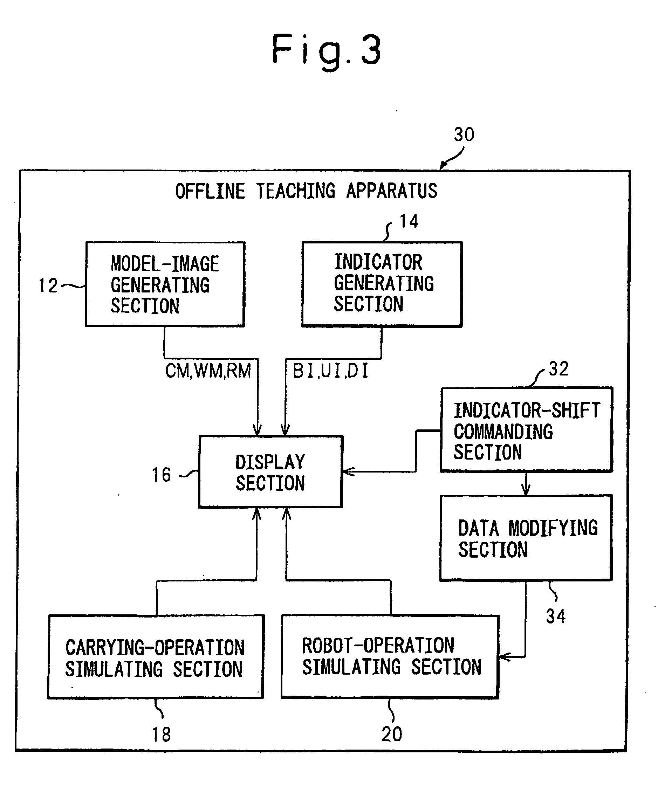

Fig. 3 shows, in a functional block diagram, a configuration of an offline teaching apparatus 30 according to an example useful for understanding the present invention. The offline teaching apparatus 30 has a basic configuration conforming to that of the offline teaching apparatus 10 of Fig. 1, and further has a configuration for permitting the robot operation and/or the spatial range S to be adjusted on the screen 22 in the above-described simulation. Therefore, corresponding components are denoted by common reference numerals or symbols, and an explanation thereof is not repeated.

In addition to the above-described basic configuration, the offline teaching apparatus 30 further includes an indicator-shift commanding section 32 for issuing a command for shifting at least one of the base-point indicator BI, the upstream-end indicator UI and the downstream-end indicator DI, displayed by the display section 16, in a direction along the carrier-route model CM on the screen 22 (Fig. 2), and a data modifying section 34 for modifying the position data of at least one of the base-point indicator BI, the upstream-end indicator UI and the downstream-end indicator DI, in accordance with the command issued by the indicator-shift commanding section 32. The indicator-shift commanding section 32 and the data modifying section 34 may be configured by a CPU (central processing unit) of a computer such as a personal computer.

The offline teaching apparatus 30 is configured such that it is possible to input, by using an input unit such as a mouse (not shown), an instruction for shifting desired one or more of the base-point indicator BI, the upstream-end indicator UI and the downstream-end indicator DI, displayed on the screen 22, to a desired position along the carrier-route model CM. Once the shifting instruction is input, the shifting command corresponding thereto is output by the indicator-shift commanding section 32 to the display section 16, and thus the display section 16 immediately changes the position of the indicator as instructed and displays it on the screen 22.

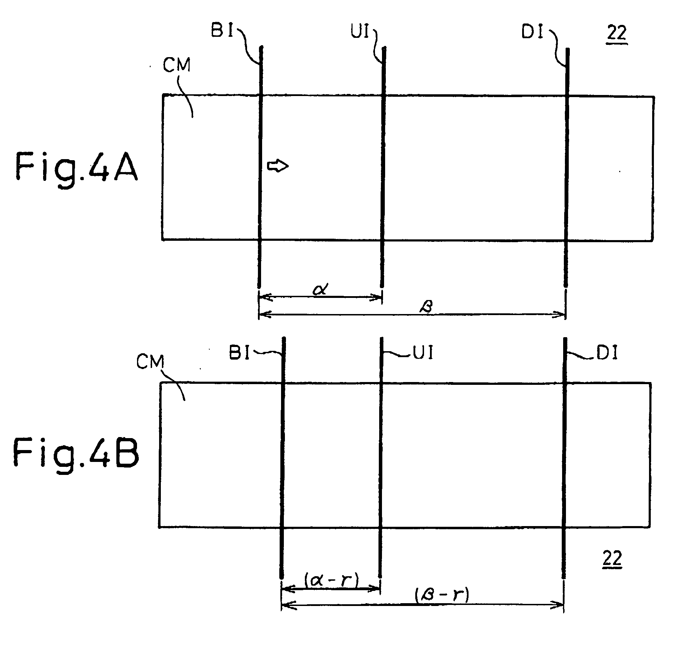

For example, an instruction for shifting the base-point indicator BI is input on the screen 22 as shown in Fig. 4A, and thereafter, the displayed position of the base-point indicator BI is changed to follow the input of the shifting instruction. In this case, the data modifying section 34 modifies the position data α of the upstream-end indicator UI and the position data β of the downstream-end indicator DI, stored in the storage section 24 (Fig. 1) with the base-point indicator BI being considered as a reference point, to (α-γ) and (β-γ), respectively.

In the above-described configuration, the robot-operation simulating section 20 simulates the robot operation on the basis of the position data of each of the indicators 8I, UI and DI after being changed. When teaching data is prepared by such a simulation and is taught to the actual robot, the base point, the motion-acceptable upstream end and the motion-acceptable downstream end, previously set in the actual robot controller, are shifted correspondingly to the respective shifting of the indicators BI, UI and DI.

According to the above configuration, it is possible to adjust, in the simulation, the robot operation and/or the spatial range S on the screen 22 of the display section 16.

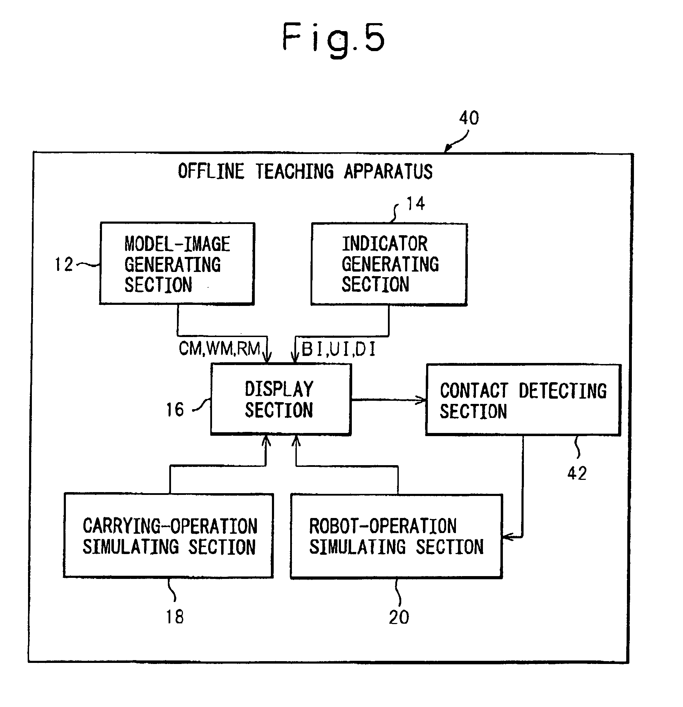

Fig. 5 shows, in a functional block diagram, a configuration of an offline teaching apparatus 40 according to an embodiment of the present invention. The offline teaching apparatus 40 has the basic configuration conforming to that of the offline teaching apparatus 10 of Fig. 1 and, further, has a configuration for permitting the validity of the robot operation on the screen 22 to be judged in the above-described simulation. Therefore, corresponding components are denoted by common reference numerals or symbols, and the explanation thereof is not repeated.

In addition to the above-described basic configuration, the offline teaching apparatus 40 further includes a contact detecting section 42 for detecting a contact, caused on the screen 22 (Fig. 2), between the robot model RM displayed by the display section 16 and the downstream-end indicator DI, during a period when the robot-operation simulating section 20 simulates the robot operation. In this arrangement, the .indicator generating section 14 may generate the downstream-end indicator DI in a form extended by an adjustable dimension in a direction toward the upstream-end indicator UI on the screen 22. The contact detecting section 42 may be configured by a CPU (central processing unit) of a computer, such as a personal computer.

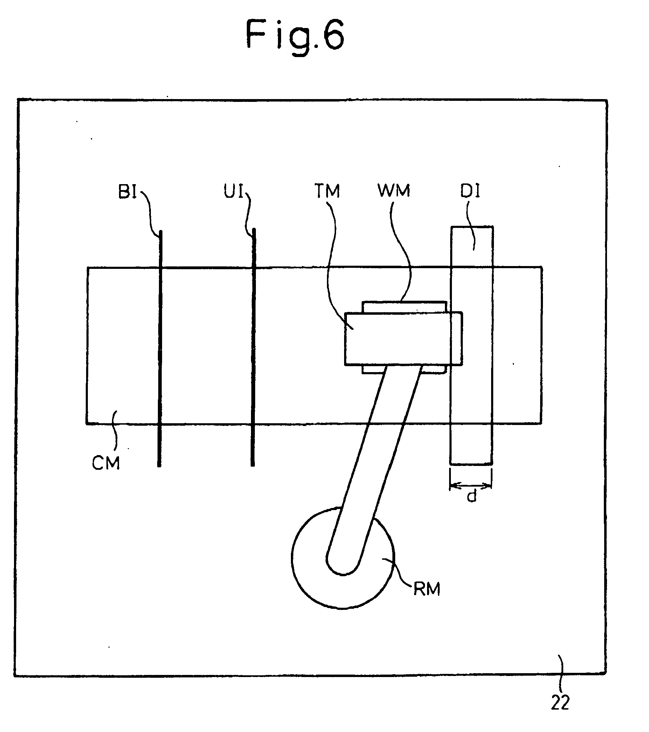

In the offline teaching apparatus 40, once the contact detecting section 42 detects the fact that the robot model RM including a tool model comes into contact with the downstream-end indicator DI during a period when the robot operation is simulated, the robot-operation simulating section 20 can act to, e.g., halt the simulation and/or output an alarm. Fig. 6 shows an exemplary condition where a tool model TM displayed as an image together with the robot model RM is in contact, on the screen 22, with the downstream-end indicator DI.

According to the above-described configuration, it is possible to easily and accurately judge the validity of the robot operation by simulation. Also, it is possible to simulate the robot operation with various margins of safety, by adjusting the dimension "d" of the downstream-end indicator DI (Fig. 6) in a direction toward the upstream-end indicator UI on the screen 22, and thereby to confirm a remaining distance allowing the actual robot not to arrive at the motion-acceptable downstream end during the robot operation.

Thus, in the offline teaching apparatus according to the present invention, it is possible to prepare a robot program involving a workpiece tracking motion in a short time and with high precision, and therefore to significantly reduce, in a robot system wherein a workpiece tracking motion is performed, the time spent for adjusting the program at a production site and the number of steps required for starting-up the system.

While the invention has been described with reference to a specific preferred embodiment, it will be understood, by those skilled in the art, that various changes and modifications may be made thereto without departing from the scope of the following claims.

## Claims

1. An offline teaching apparatus adapted for generating and teaching, in an offline mode, a robot operation, relating to tracking and working, performed by a robot on a workpiece traveling along a carrier route, **characterized in that** said offline teaching apparatus comprises:
a model-image generating section (12) adapted for generating images of a carrier-route model (CM), a workpiece model (WM) and a robot model (RM), provided respectively by modeling the carrier route, the workpiece and the robot;
an indicator generating section (14) adapted for generating a base-point indicator (BI) representing a base point used for detecting passing of the workpiece along the carrier route, and also generating an upstream-end indicator (UI) and a downstream-end indicator (DI), representing respectively a motion-acceptable upstream end and a motion-acceptable downstream end, said upstream end and said downstream end defining, along a workpiece traveling direction (T), a spatial range (S) permitting the robot to perform the robot operation, at a location downstream of the base point in the workpiece traveling direction along the carrier route;
a display section (16) adapted for displaying, on a screen (22), said images of said carrier-route model, said workpiece model and said robot model, generated by said model-image generating section, together with said base-point indicator, said upstream-end indicator and said downstream-end indicator, generated by said indicator generating section, in a relative positional relationship corresponding to an actual working environment of the robot;
a carrying-operation simulating section (18) adapted for causing said workpiece model displayed by said display section to simulate a workpiece traveling motion along said carrier-route model on said screen; and
a robot-operation simulating section (20) adapted for causing said robot model displayed by said display section to simulate the robot operation on said screen, during a period from an instant when said workpiece model passes by said upstream-end indicator until an instant when said workpiece model arrives at said downstream-end indicator due to said workpiece traveling motion on said screen,
wherein the offline teaching apparatus further comprises a contact detecting section (42) adapted for detecting a contact, caused on said screen (22), between said robot model displayed by said display section and said downstream-end indicator (DI), during a period when said robot-operation simulating section (20) simulates the robot operation, and
wherein said indicator generating section (14) is adapted for generating said downstream-end indicator (DI) in a form extended by an adjustable dimension in a direction toward said upstream-end indicator (UI) on said screen (22).

2. An offline teaching apparatus as set forth in claim 1, further comprising an indicator-shift commanding section (32) adapted for issuing a command for shifting at least one of said base-point indicator, said upstream-end indicator and said downstream-end indicator, displayed by said display section, in a direction along said carrier-route model on said screen, and a data modifying section (34) adapted for modifying position data (α, β) of at least one of said base-point indicator, said upstream-end indicator and said downstream-end indicator, in accordance with said command issued by said indicator-shift commanding section.

3. An offline teaching apparatus as set forth in any one of claims 1 or 2, wherein said indicator generating section is adapted for determining respective positions of said base-point indicator, said upstream-end indicator and said downstream-end indicator on said screen, based on actual carrying-operation information concerning said carrier route.

4. An offline teaching apparatus as set forth in any one of claims 1 or 2, wherein said carrying-operation simulating section is adapted for generating said workpiece traveling motion on said screen, based on actual carrying-operation information concerning said carrier route.

## Patentansprüche

1. Offline-Lehrvorrichtung, die dazu eingerichtet ist, in einem Offlinemodus eine Robotertätigkeit zu erzeugen und zu lehren, die ein Verfolgen und Bearbeiten betrifft, und die von einem Roboter an einem Werkstück ausgeführt wird, das entlang einer Transportstrecke verfährt, **dadurch gekennzeichnet, dass** die Offline-Lehrvorrichtung umfasst:
einen Modellabbildung-Erzeugungsbereich (12), der dazu eingerichtet ist, Abbildungen eines Transportstreckenmodells (CM), eines Werkstückmodells (WM) und eines Robotermodells (RM) zu erzeugen, indem jeweils die Transportstrecke, das Werkstück und der Roboter modelliert werden;
einen Kennzeichen-Erzeugungsbereich (14), der dazu eingerichtet ist, ein Basispunktkennzeichen (BI) zu erzeugen, das einen Basispunkt zum Erkennen eines Verfahrens des Werkstücks entlang der Transportstrecke darstellt, und ferner ein Kennzeichen eines vorgelagerten Endes (UI) und ein Kennzeichen eines nachgelagerten Endes (DI) zu erzeugen, die jeweils ein bewegungszulässiges vorgelagertes Ende und ein bewegungszulässiges nachgelagertes Ende darstellen, wobei das vorgelagerte Ende und das nachgelagerte Ende entlang einer Werkstückverfahrrichtung (T) einen räumlichen Bereich (S) bestimmen, der dem Roboter erlaubt, in einem dem Basispunkt in Werkstückverfahrrichtung entlang der Transportstrecke nachgelagerten Ort, die Robotertätigkeit auszuführen;
einen Anzeigebereich (16), der dazu eingerichtet ist, die Abbildungen des Transportstreckenmodells, des Werkstückmodells und des Robotermodells, die von dem Modellabbildung-Erzeugungsbereich erzeugt worden sind, gemeinsam mit dem Basispunktkennzeichen, dem Kennzeichen des vorgelagerten Endes und dem Kennzeichen des nachgelagerten Endes, die von dem Kennzeichen-Erzeugungsbereich erzeugt worden sind, in einer relativen Positionsbeziehung entsprechend einer tatsächlichen Arbeitsumgebung des Roboters, auf einem Bildschirm (22) anzuzeigen;
einen Transporttätigkeit-Simulationsbereich (18), der dazu eingerichtet ist, das Werkstückmodell, das von dem Anzeigebereich angezeigt wird, zu veranlassen, eine Werkstückverfahrbewegung entlang des Transportstreckenmodells auf dem Bildschirm zu simulieren; und
einen Robotertätigkeit-Simulationsbereich (20), der dazu eingerichtet ist, das Robotermodell, das von dem Anzeigebereich angezeigt wird, zu veranlassen, die Robotertätigkeit auf dem Bildschirm zu simulieren, während einer Periode von einem Zeitpunkt an, wenn das Werkstückmodell das Kennzeichen des vorgelagerten Endes passiert, bis zu einem Zeitpunkt, wenn das Werkstückmodell das Kennzeichen des nachgelagerten Endes aufgrund der Werkstückverfahrbewegung auf dem Bildschirm erreicht,
wobei die Offline-Lehrvorrichtung ferner einen Kontakterkennungsbereich (42) umfasst, der dazu eingerichtet ist, einen Kontakt zu erkennen, der auf dem Bildschirm (22) bewirkt wird, zwischen dem Robotermodell, das von dem Anzeigebereich angezeigt wird, und dem Kennzeichen des nachgelagerten Endes (DI), während eines Zeitraums, wenn der Robotertätigkeit-Simulationsbereich (20) die Robotertätigkeit simuliert, und
wobei der Kennzeichen-Erzeugungsbereich (14) dazu eingerichtet ist, das Kennzeichen des nachgelagerten Endes (DI) in einer Form zu erzeugen, die durch eine einstellbare Dimensionierung in Richtung des Kennzeichens des vorgelagerten Endes (UI) auf dem Bildschirm (22) erweitert ist.

2. Offline-Lehrvorrichtung nach Anspruch 1, die ferner umfasst: einen Kennzeichenumschaltung-Steuerungsbereich (32), der dazu eingerichtet ist, einen Befehl auszugeben zum Umschalten wenigstens eines des Basispunktkennzeichens, des Kennzeichens des vorgelagerten Endes und des Kennzeichens des nachgelagerten Endes, die von dem Anzeigebereich angezeigt werden, in einer Richtung entlang des Transportstreckenmodells auf dem Bildschirm, und einen Datenänderungsbereich (34), der dazu eingerichtet ist, Positionsdaten (α, β) von wenigstens einem des Basispunktkennzeichens, des Kennzeichens des vorgelagerten Endes und des Kennzeichen des nachgelagerten Endes zu verändern, entsprechend des Befehls, der von dem Kennzeichenumschaltung-Steuerungsbereich abgegeben worden ist.

3. Offline-Lehrvorrichtung nach einem der Ansprüche 1 oder 2, wobei der Kennzeichen-Erzeugungsbereich dazu eingerichtet ist, die jeweiligen Positionen des Basispunktkennzeichens, des Kennzeichens des vorgelagerten Endes und des Kennzeichens des nachgelagerten Endes auf dem Bildschirm zu bestimmen, anhand von tatsächlichen Transporttätigkeitsinformationen bezüglich der Transportstrecke.

4. Offline-Lehrvorrichtung nach einem der Ansprüche 1 oder 2, wobei der Transporttätigkeit-Simulationsbereich dazu eingerichtet ist, die Werkstückverfahrbewegung auf dem Bildschirm zu erzeugen, anhand der tatsächlichen Transporttätigkeitsinformation bezüglich der Transportstrecke.

## Revendications

1. Appareil d'apprentissage hors ligne adapté à générer et enseigner, dans un mode hors ligne, une opération de robot, se rapportant à un suivi et un travail, mis en oeuvre par un robot sur une pièce à usiner se déplaçant le long d'un chemin de transporteur, **caractérisé en ce que** ledit appareil d'apprentissage hors ligne comprend :
une section (12) de génération d'images de modèles adaptée à générer des images d'un modèle de chemin de transporteur (CM), d'un modèle de pièce à usiner (WM) et d'un modèle de robot (RM), fournis respectivement par la modélisation du chemin de transporteur, de la pièce à usiner et du robot ;
une section (14) de génération d'indicateurs adaptée à générer un indicateur de point de base (BI) représentant un point de base utilisé pour détecter le passage de la pièce à usiner le long du chemin de transporteur, et à générer également un indicateur d'extrémité amont (UI) et un indicateur d'extrémité aval (DI), représentant respectivement une extrémité amont acceptable en termes de mouvement et une extrémité aval acceptable en termes de mouvement, ladite extrémité amont et ladite extrémité aval définissant, dans un sens de déplacement (T) de pièce à usiner, une plage spatiale (S) permettant au robot d'exécuter l'opération de robot, en un emplacement en aval du point de base dans le sens de déplacement de pièce à usiner, le long du chemin de transporteur ;
une section (16) d'affichage adaptée à afficher, sur un écran (22), lesdites images dudit modèle de chemin de transporteur, dudit modèle de pièce à usiner et dudit modèle de robot, générées par ladite section de génération d'images de modèles, en même temps que ledit indicateur de point de base, ledit indicateur d'extrémité amont et ledit indicateur d'extrémité aval, générés par ladite section de génération d'indicateurs, dans une relation positionnelle relative correspondant à un environnement de travail réel du robot ;
une section (18) de simulation d'opération de transport adaptée à faire en sorte que ledit modèle de pièce à usiner affiché par ladite section d'affichage simule un mouvement de déplacement de pièce à usiner le long dudit modèle de chemin de transporteur sur ledit écran ; et
une section (20) de simulation d'opération de robot adaptée à faire en sorte que ledit modèle de robot affiché par ladite section d'affichage simule l'opération de robot sur ledit écran, sur une période d'un instant où ledit modèle de pièce à usiner passe par ledit indicateur d'extrémité amont jusqu'à un instant où ledit modèle de pièce à usiner arrive audit indicateur d'extrémité aval du fait dudit mouvement de βdéplacement de pièce à usiner sur ledit écran,
dans lequel l'appareil d'apprentissage hors ligne comprend en outre une section (42) de détection de contact adaptée à détecter un contact, causé sur ledit écran (22), entre ledit modèle de robot affiché par ladite section d'affichage et ledit indicateur d'extrémité aval (DI), sur une période pendant laquelle ladite section (20) de simulation d'opération de robot simule l'opération de robot, et
dans lequel ladite section (14) de génération d'indicateurs est adaptée à générer ledit indicateur d'extrémité aval (DI) sous une forme étendue d'une dimension ajustable dans une direction vers ledit indicateur d'extrémité amont (UI) sur ledit écran (22).

2. Appareil d'apprentissage hors ligne selon la revendication 1, comprenant en outre une section (32) de commande de décalage d'indicateurs adaptée à émettre une commande pour décaler au moins un parmi ledit indicateur de point de base, ledit indicateur d'extrémité amont et ledit indicateur d'extrémité aval, affichés par ladite section d'affichage, dans un sens le long dudit modèle de chemin de transporteur sur ledit écran, et une section (34) de modification de données adaptée à modifier des données de position (α, β) d'au moins un parmi ledit indicateur de point de base, ledit indicateur d'extrémité amont et ledit indicateur d'extrémité aval, conformément à ladite commande émise par ladite section de commande de décalage d'indicateurs.

3. Appareil d'apprentissage hors ligne selon l'une quelconque des revendications 1 ou 2, dans lequel ladite section de génération d'indicateurs est adaptée à déterminer des positions respectives dudit indicateur de point de base, dudit indicateur d'extrémité amont et dudit indicateur d'extrémité aval sur ledit écran, sur la base d'une information d'opération de transport réelle concernant ledit chemin de transporteur.

4. Appareil d'apprentissage hors ligne selon l'une quelconque des revendications 1 ou 2, dans lequel ladite section de simulation d'opération de transport est adaptée à générer ledit mouvement de déplacement de pièce à usiner sur ledit écran, sur la base d'une information d'opération de transport réelle concernant ledit chemin de transporteur.
